# EUROPEAN PATENT SPECIFICATION

(11) **EP 3 707 355 B1**
(45) Date of publication and mention of the grant of the patent: **05.07.2023**
(21) Application number: 17800766.2
(22) Date of filing: 07.11.2017
(51) Int. Cl.: F01N 3/20, F01N 3/28, F01N 13/00, F01N 13/02, F01N 13/18, F01N 1/00, F01N 1/02, F01N 1/16, B29C 65/00, F16L 17/00

(54) **AN EXHAUST GAS SILENCER FOR AN EXHAUST SYSTEM OF AN INTERNAL COMBUSTION ENGINE, AND THE EXHAUST SYSTEM**
ABGASSCHALLDÄMPFER FÜR EIN ABGASSYSTEM EINER BRENNKRAFTMASCHINE, UND DAS ABGASSYSTEM
SILENCIEUX DE GAZ D'ÉCHAPPEMENT POUR UN SYSTÈME DE GAZ D'ÉCHAPPEMENT D'UN MOTEUR À COMBUSTION INTERNE, ET LE SYSTÈME DE GAZ D'ÉCHAPPEMENT

(43) Date of publication of application: 16.09.2020
(73) Proprietor: Wärtsilä Finland Oy, 65100 Vaasa (FI)
(72) Inventor: RÖNNBACK, Kaj-Olof, 65380 Vaasa (FI)
(74) Representative: Genip Oy
(86) International application number: PCT/EP2017/078443
(87) International publication number: WO 2019/091542

(56) References cited:
- EP-A1- 0 779 415
- EP-A1- 0 779 415
- EP-A1- 2 314 834
- EP-A1- 2 314 834
- EP-A1- 2 698 511
- EP-A1- 2 698 511
- EP-A1- 2 698 511
- WO-A1-2013/166154
- WO-A1-2013/166154
- WO-A1-2013/166154
- DE-C1- 19 548 719
- DE-C1- 19 548 719
- DE-C1- 19 548 719
- FR-A1- 2 694 600
- FR-A1- 2 694 600
- FR-A1- 2 694 600
- US-A- 2 115 103
- US-A- 2 115 103
- US-A- 2 115 103
- US-A- 4 513 841
- US-A- 4 513 841
- US-A- 4 513 841
- US-B2- 6 709 023
- US-B2- 6 709 023
- US-B2- 9 453 444
- US-B2- 9 453 444

## Description

### Technical field

The present invention relates to an exhaust silencer for an exhaust system of an internal combustion engine, and an exhaust system utilizing the exhaust gas silencer. The exhaust silencer comprises a gas inlet and a gas outlet at opposite ends thereof, a central pipe arranged in flow communication with the gas inlet and a gas, the central pipe being surrounded by a silencer chamber according to the preamble of claim 1.

### Background art

The exhaust system of internal combustion engines used for powering marine vessels or power plants comprise several devices for treating exhaust gas and reducing exhaust noise. A traditional arrangement has an SCR- (Selective Catalytic Reduction) reactor where the nitrogen oxides of the exhaust gas are converted to nitrogen (N₂) and water (H₂O). As the SCR- reactor requires urea to participate the conversion in the reactor, a urea injector is positioned upstream of the SCR- reactor in the exhaust pipe between the exhaust manifold of the engine and the SCR- reactor. And, to reduce the engine noise further, the exhaust gas is discharged from the SCR- reactor to an exhaust gas noise attenuator or exhaust gas silencer, which operates in such an environment that the temperature has time to cool down on its path in the exhaust pipe and the SCRreactor.

It is normal practice that in both marine vessels and power plants the SCR- reactor is positioned relatively far from the exhaust manifold, as the urea injection unit has to be arranged at such a distance upstream of the SCR- reactor that the urea has time to be mixed with the exhaust gas. In other words, there is a considerable length of exhaust pipe between the urea injector and the SCR- reactor, which is in no other use than for flowing the exhaust gas. Recently it is proposed that a further exhaust silencer or exhaust gas noise attenuator is positioned between the urea injector and the SCR- reactor. And to make the exhaust gas system even more compact, the latest development is to incorporate the urea injector into the exhaust silencer and position such upstream of the SCRreactor. However, performed experiments show that, due to the positioning of the new exhaust silencer upstream of the SCR- reactor, the exhaust silencer is subject to higher temperatures, and higher temperature gradients, than exhaust silencers of prior art in their position downstream of the SCR- reactor. This is considered a serious problem due to the internal construction of an exhaust silencer.

The exhaust gas noise attenuators or exhaust silencers are usually formed of a central pipe and an outside housing, the chamber between the central pipe and the housing being used for silencing the noise. Thus, the central pipe functions in a clearly higher temperature than the housing of the silencer resulting in temperature related stresses in the silencer construction.

WO-A1-2014076355 discloses an exhaust gas noise attenuator unit comprising at least two reactive attenuation chambers. A first attenuation chamber of the at least two attenuation chambers is arranged in flow connection with the duct section at a first location in longitudinal direction and a second attenuation chamber of the at least two attenuation chambers is arranged in flow connection with the duct section at a second location in longitudinal direction.

A further temperature-related problem may be seen in the construction proposed in the above mentioned WO- application. The connections between the duct section and attenuation chamber are made by a number of openings in the wall of the duct section. Now, performed tests have shown that the more openings there are for one attenuation chamber the sooner the relatively narrow land sections between the openings are bent or in the least weakened such that they do not necessarily carry the load they are supposed to carry.

Document US4513841 discloses, see in particular Fig. 6: an exhaust gas silencer comprising a central pipe having an inlet end (left side) and an outlet end (right side), a silencer chamber between a silencer housing and the central pipe, and at least one opening for arranging communication from the central pipe to the silencer chamber, the silencer housing having an inlet collar fastened to the central pipe, the central pipe being formed of an inlet section with an inlet flange and an outlet section with an outlet flange, the sections having a common axis and being provided with a sliding joint between the inlet flange and the outlet flange allowing the inlet section to move in axial direction in relation to the outlet section.

Document EP0779415 discloses a silencer apparatus wherein a mixer unit is built into a pipe segment which is provided with a number of openings opening out into an otherwise closed resonance chamber which is arranged concentrically to the pipe segment.

Thus, an object of the present invention is to provide an exhaust silencer, which solves at least one problem of the prior art exhaust gas systems.

Another object of the present invention is to provide an exhaust silencer, which provides efficient attenuation of noise but allows such an installation in connection with an internal combustion engine exhaust gas system that saves space compared to prior art systems.

Yet another object of the present invention is to provide an exhaust silencer in which the thermal expansion and contraction are taken into account such that the exhaust silencer is subjected to no or significantly smaller thermal stresses than the prior art silencers.

Still another object of the present invention is to provide an exhaust silencer in which the opening area between the duct section and the attenuation chambers is redesigned to take into account increased thermal stresses.

### Disclosure of the Invention

At least one of the objects of the present invention is substantially met by an exhaust gas silencer comprising a central pipe having an inlet end and an outlet end, a silencer chamber between a silencer housing and the central pipe, the silencer housing having an inlet collar fastened to the central pipe and an outlet collar, and the central pipe having two openings for arranging communication from the central pipe to the silencer chamber, the openings being arranged next to the inlet collar between the inlet collar and an outlet flange, the central pipe being formed of an inlet section with an inlet flange and an outlet section with an outlet flange, the sections having a common axis and being provided with a sliding joint between the inlet flange and the outlet flange allowing the inlet section to move in axial direction in relation to the outlet section wherein a urea injection/mixing device is provided with
- a urea mixer between the openings and the outlet collar and
- a urea injection nozzle of a urea injection unit downstream of the urea mixer, between the urea mixer and the outlet collar.

It is also characteristic to the invention that an exhaust gas system having an SCR- reactor and an exhaust gas silencer arranged downstream of the SCR- reactor comprises an exhaust gas silencer upstream of the SCR- reactor, the exhaust gas silencer having a sliding joint in its central pipe inside the silencer housing.

The exhaust gas silencer of the present invention
- makes more efficient use of the space needed for the exhaust gas system,
- reduces the exhaust noise more than prior art constructions by providing one additional exhaust gas silencer in the system,
- makes it possible to position the exhaust silencer in any desired or appropriate position as the silencer of the present invention is insensitive to temperature.

### Brief Description of Drawings

In the following, the present invention will be described with reference to the accompanying exemplary, schematic drawings, in which
Figure 1 illustrates schematically an internal combustion engine with its prior art exhaust system,
Figure 2 illustrates schematically an internal combustion engine with a more modern exhaust system,
Figure 3a illustrates the exhaust silencer in accordance with the present invention,
Figure 3b illustrates the interior elements of the exhaust silencer of Figure 3,
Figure 4 illustrates, in an enlarged scale, a longitudinal cross section of the inlet end of the exhaust silencer of Figure 3,
Figure 5 illustrates, in an enlarged scale, a longitudinal cross section of the outlet end of the exhaust silencer of Figure 3,
Figure 6a illustrates a cross section A - A of Figure 3, and
Figure 6b illustrates detail B of Figure 7a in an enlarged scale.

### Detailed Description of Drawings

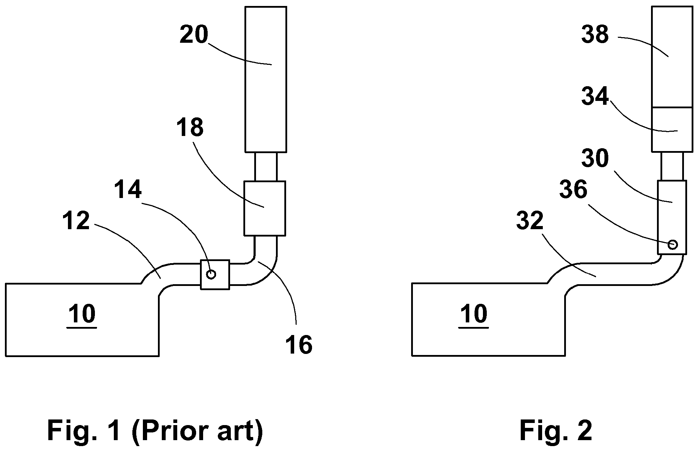

Figure 1 illustrates schematically an internal combustion engine having a prior art exhaust system. The internal combustion piston engine 10 is connected by means of a first exhaust pipe section 12 to a urea injection unit 14, normally a nozzle arranged in the exhaust pipe, the nozzle being preceded by a specific inclined mixing plate. The second exhaust pipe section 16 following the urea injection device 14 acts as the urea mixing space and takes the exhaust gas-urea mixture to the SCR (Selective Catalytic Reduction) reactor 18 where the nitrogen oxides of the exhaust gas are converted with the help of urea to nitrogen (N₂) and water (H₂O). The SCR reactor 18 is traditionally followed by a separate exhaust gas silencer 20. As the mixing of urea in the exhaust gas is mostly based on turbulent flow conditions in the second exhaust pipe section there is a need to provide the second exhaust pipe section with a certain length so that the urea has time enough to be mixed substantially evenly into the exhaust gas prior to the SCR- reactor.

Figure 2 illustrates schematically an internal combustion engine with a more modern exhaust gas system. In the modern exhaust gas system of the internal combustion engine 10 an exhaust silencer 30 is installed to the end of the first exhaust pipe section 32 upstream of the SCR reactor 34 and a urea injection/mixing device 36 is built in combination with the exhaust silencer 30. Now that the urea injection/mixing device 36 is provided with the specific inclined mixing plate arranged in the exhaust gas flow path the plate leaves an annular space between itself and the walls of the flow path. The actual injection of urea takes place downstream of the inclined plate such that the urea is injected in a heavily turbulent exhaust gas flow. By means of the use of the inclined plate the turbulence is much more powerful, whereby a shorter length of pipe is sufficient for adequate mixing of urea for the SCR- reactor 34. The SCR- reactor 34 is followed by an exhaust gas silencer 38 which may also be built in combination with the SCR- reactor 34, though the construction illustrated in Figure 1 may also be used.

The more detailed construction of the combined urea mixing device - exhaust gas silencer of prior art is such that the silencer has a central pipe and radially outside thereof at least one, preferably two silencer chambers. The silencer chambers are in communication with the exhaust gas flow path in the central pipe at the inlet end of the exhaust gas silencer by means of openings such that the openings cover about 60 - 80% of the circumference of the central pipe, the number of openings for the full circumference being 8 to 10. Now that there is of the order of 30% wall area between the openings and, if assumed that the number of openings (and wall areas between the openings) is 6, there is only 5% of the circumference for the width of each wall section. Such a 5 % share means, in practice, width of about 40 - 60 mm for each wall section. Now that the central pipe of the exhaust silencer is made of relatively thin material such narrow sections more easily suffer from heat and are bent to such an extent that there is a risk of breakage especially if the wall areas are subject to axial forces based on thermal contraction and expansion of the central pipe.

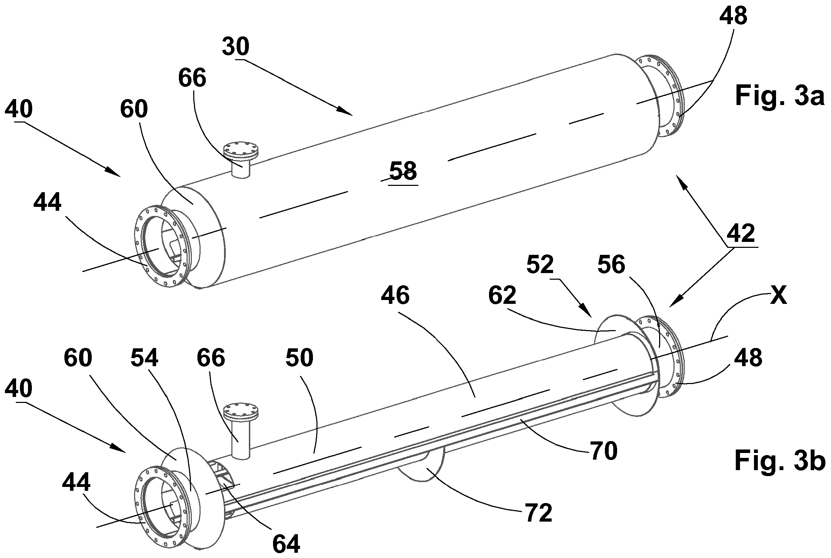

Figures 3a and 3b illustrate the exhaust silencer 30 in accordance with the present invention. The exhaust gas silencer 30 has an inlet end 40 and an outlet end 42. The inlet end 40 has an inlet flange 44 for coupling the exhaust gas silencer to the first exhaust pipe section (shown in Figures 1 and 2). The inlet flange 44 is fastened to a central pipe 46 to the opposite end of which, at the outlet end 42 of the exhaust gas silencer, an outlet flange 48 is fastened. The central pipe 46 has an inlet section 50 and an outlet section 52. The central pipe 46 and both the inlet section 50 and the outlet section 52 have a common axis X. The inlet section 50 is fastened at its first end part either directly or by means of an inlet neck 54, which is an elemental part of the inlet section 50, to the inlet flange 44 and having its second end part extending towards the outlet flange 48. The outlet section 52 is fastened at its second end part either directly or via an outlet neck 56, which is an elemental part of the outlet section 52, to the outlet flange 48 and having its first end part extending towards the inlet flange 44. The central pipe 46 is, or its inlet and outlet sections 50 and 52 are, for a part/parts of its/their length surrounded by a silencer chamber. The silencer chamber is formed between the central pipe 46 and a housing, which is formed of an outer wall 58, an inlet collar 60 at the inlet end 40 and an outlet collar 62 at the outlet end 42 of the exhaust gas silencer 30. At the inlet end 40 the inlet collar 60 is fastened to the central pipe 46, i.e. to the inlet section 50 or the inlet neck 54 thereof. At the outlet end 42 the outlet collar 62 is fastened to the central pipe 46, i.e. to the outlet section 52 or the outlet neck 56 thereof. The central pipe 46 is provided at its inlet end 40 next to the inlet collar 60 with two openings 64 arranging communication from the interior of the central pipe 46 to the silencer chamber. Both the outer wall 58 and the central pipe 46 are provided at the inlet end 40 of the exhaust silencer with an opening for insertion of the urea injection unit 66, which is positioned at a distance downstream of the two openings 64, or between the two openings 64 and the outlet collar 62, to the silencer chamber, i.e. next to the openings 64 and opposite the inlet collar 60.

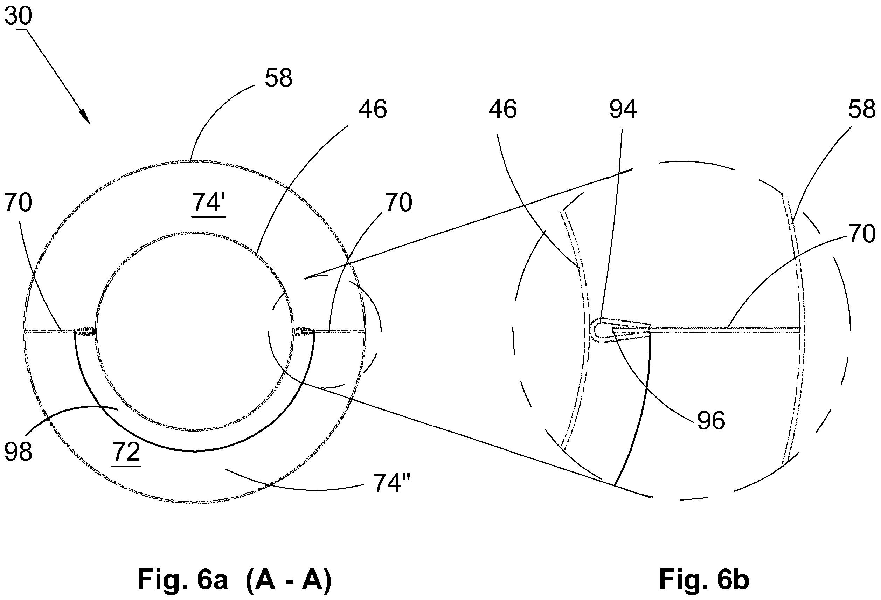

Figure 3b illustrates also, as an additional feature of the present invention, an exhaust silencer having two or more silencer chambers in place of an exhaust silencer having only one silencer chamber as discussed above. Here, a partition wall 70 is arranged to extend for the entire length between the inlet collar 60 and the outlet collar 62 as well as for the entire width between the central pipe 46 and the outer wall 58 of the silencer chamber. There is also another partition wall (not shown) arranged, (preferably, but not necessarily) on the opposite side of the central pipe 46 so that the silencer chamber is divided into two separate silencer chambers. Figure 3b also shows a semi-annular partition plate 72, which divides, in axial direction, one, here the lower, silencer chamber into two smaller chambers. The partition plate 72 may have, however, any appropriate angular extension, i.e. not only 180 degrees. The function of the silencer chambers is discussed in more detail in WO-A1-2014076355 and WO-A1-2016189187. The construction and function of the partition walls and plate is discussed in more detail in connection with Figures 6a and 6b.

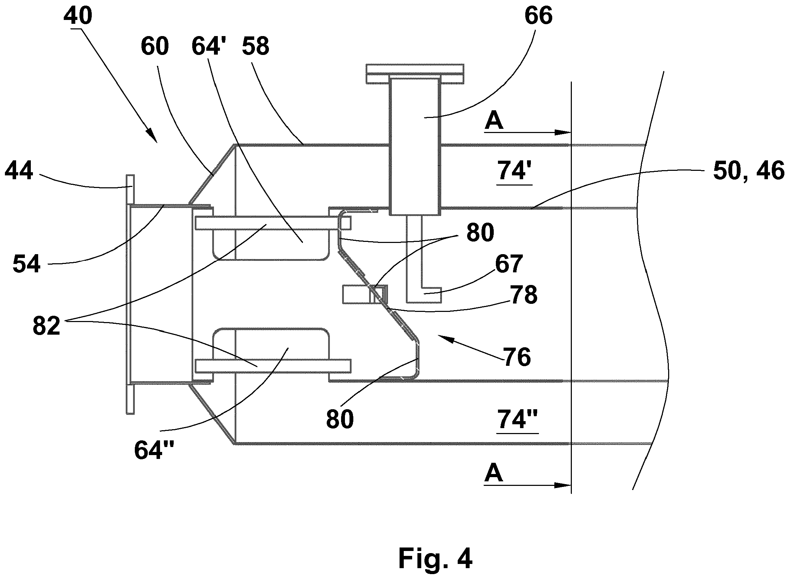

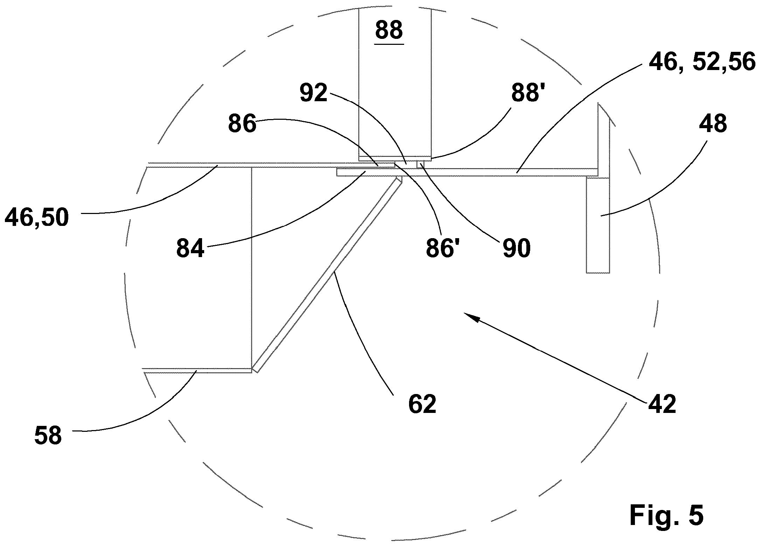

Figure 4 illustrates the inlet end 40 of the exhaust gas silencer of Figures 3a and 3b in more detail. It is shown that the inlet flange 44 is fastened to the central pipe 46, and more specifically to the inlet section 50 of the central pipe 46, i.e. in this embodiment to a short inlet neck pipe 54 being an elemental part of the inlet section 50. The inlet collar 60 is fastened to the inlet section 50 of the central pipe 46, i.e. to the inlet neck pipe 54 thereof. The radially outer circumference of the inlet collar 60 is fastened to the outer wall 58 of the exhaust gas silencer. At a short distance from the inlet collar 60 opposite the inlet flange 44 the inlet section 50 of the central pipe 46 is provided with two openings 64' and 64", for example one directed, in Figure 4, generally in upward direction and the other generally in downward direction, allowing communication between the interior of the central pipe 46 and at least one silencer chamber delimited by the outer wall 58, the inlet collar 60 and the outlet collar and the central pipe 46. In case there are two separate silencer chambers, i.e. an upper silencer chamber 74' and a lower silencer chamber 74" as shown in Figure 4, one opening 64' is for the upper silencer chamber 74' and the other 64" for the lower silencer chamber 74". At a short distance downstream (to the right) of the openings 64' and 64" of the central pipe 46, i.e. between the opening/s 64, 64', 64" and the outlet collar (62 in Figures 3b and 5), is provided with an urea mixer 76, which is formed of an inclined plate 78 supported inside the central pipe 46 by means of a multitude of, preferably four, legs 80. The inclined plate 78 leaves an annular flow passage for the exhaust gas between itself and the interior surface of the central pipe 46. The function of the urea mixer 76 is to create such a turbulence in the exhaust gas flow that the urea injected in the turbulent flow is mixed sufficiently evenly in the exhaust gas prior to the exhaust gas entering the SCR reactor. At a short distance downstream of the urea mixer 76, between the urea mixer 76 and the outlet collar (62 in Figures 3b and 5), is a urea injection nozzle 67 of the urea injection unit 66 arranged, whereby the urea is injected in the turbulent flow of exhaust gas.

Figure 4 also shows at least one reinforcing bar 82 arranged in axial direction across each openings 64' and 64". The purpose of the reinforcing bars 82 is, by being fastened to the inlet section 50 of the central pipe 46, on both axial sides of the openings 64' and 64" to prevent the inlet section 50 of the central pipe 46 from bending or buckling due to axial load, though a significant part (the openings) of the circumference thereof is cut away.

Figure 5 illustrates in an enlarged scale a partial axial cross section of the outlet end 42 of the exhaust silencer of the present invention. The feature Figure 5 is specifically discussing is the sliding joint arrangement, which allows the central pipe 46 to thermally expand and contract in both radial and axial direction without causing any stress in the structures of the exhaust gas silencer. It is shown that the outlet flange 48 is fastened to the central pipe 46, and more specifically to the outlet section 52 thereof to an outlet neck pipe 56 to which also the outlet collar 62 is fastened. Further Figure 5 shows how the outlet neck pipe 56, i.e. the first end part 84 of the outlet section 52 of the central pipe 46, extends radially outside the second end part 86 of the inlet section 50 of the central pipe 46. At the inside of the second end part 86 of the inlet section 50 an annular ring section 88 is fastened such that its second axial end or rim 88' extends beyond the second end or rim 86' (facing the flange 48) of the inlet section 50. At a distance from the second end 86' of the inlet section 50 and on the outer surface of the annular ring section 88 there is a distance ring 90 fastened such that a cavity 92 is left between the second end 86' of the inlet section 50 and the distance ring 90. The distance ring 90 is arranged in slidable communication with the inner surface of the outlet section 52 of the inner pipe 46. The cavity 92 may be provided with a glass fibre sealing band. Now that all components of the sliding joint, i.e. the second end part 86 of the inlet section 50, the first end part 84 of the outlet section 52, the distance ring 90 and the annular ring section 88 are substantially in the same temperature there is no need to consider radial thermal expansion, i.e. all the components expand or contract in the same pace.

The sliding joint between the second end of the inlet section and the first end of the outlet section may also be arranged such that the first end part of the outlet section is arranged inside the second end part of the inlet section. Now, the inlet section may be provided with an annular ring section fastened on an outside circumference of the inlet section, and a distance ring fastened on the inner circumference of the annular ring section at a distance from an end or rim of the inlet section facing the outlet flange. The distance ring is arranged in slidable communication with the outer surface of the outlet section, and provides, between itself and the end or rim of the inlet section, a cavity for a sealing if such is desired.

Figures 6a and 6b illustrate the construction of the partition walls dividing the silencer chamber into two or more parts. Figure 6a shows two partition walls 70 extending in longitudinal direction from the inlet collar to the outlet collar and dividing the silencer chamber into two separate chambers 74' and 74". Figure 6a also shows a semi-annular partition plate 72, which divides one of the silencer chambers into two smaller chambers. Figure 6b shows how the central pipe 46 is provided with a generally two-legged U-shaped element or slide member 94 fastened on the outer surface of the central pipe 46. The partition wall 70 is firstly dimensioned and then fastened on the inner surface of the outer wall 58 such that the edge 96 of the partition wall 70 remote from the outer wall 58 extends between the legs of the U-shaped element 94. With the described structure the central pipe 46 with the U-shaped element 94 may freely expand and contract in both axial and radial directions, the legs of the U-shaped element 94 sliding on the surfaces of the partition wall 70. Preferably, but not necessarily, the surface of the partition wall 70 or the inner surface of the U-shaped element 94 is provided with a glass fibre band for improving the sealing function between the legs of the U-shaped element 94 and the partition wall 70.

As to the semi-annular partition plate 72 it is fastened transverse, preferably at right angles, to the axis of the housing to the inner wall of the housing 58 and extends between the legs of a semi-annular U-shaped element 98 fastened transverse, preferably at right angles, to the axis of the central pipe 46 on the outer surface thereof.

In view of the above discussed embodiments it should be kept in mind that the sliding joint of the present invention discussed in Figure 5 may be arranged in any axial position along the length of the central pipe inside the silencer housing. In other words, it may be located at a side of the urea mixer or even upstream thereof, i.e. between the openings from the central pipe to the silencer chamber/s and the inlet collar. Also, it is possible to arrange the inlet section of the central pipe extend outside the outlet section of the central pipe, whereby also the distance ring and the annular ring section fastened thereto would be positioned radially outside the outlet section. In a similar manner the second end of the inlet section could be provided with a corresponding distance ring and annular ring section fastened thereto either radially inside or outside the inlet section, depending, naturally, on the positioning of the first end part of the outlet section in relation to the second end of the inlet section.

The exhaust gas silencer may be manufactured entirely of acid proof stainless steel, but usually the inlet and outlet flanges are, for cost reasons, made of normal, so called black steel.

While the invention has been described herein by way of examples in connection with what are, at present, considered to be the most preferred embodiments, it is to be understood that the invention is not limited to the disclosed embodiments, but is intended to cover various combinations or modifications of its features, and several other applications included within the scope of the invention, as defined in the appended claims.

## Claims

1. An exhaust gas silencer (30) comprising a central pipe (46) having an inlet end (40) and an outlet end (42), a silencer chamber (74', 74") between a silencer housing and the central pipe (46), the silencer housing having an inlet collar (60) fastened to the central pipe (46) and an outlet collar (62), and the central pipe (46) having two openings (64, 64', 64") for arranging communication from the central pipe (46) to the silencer chamber (74', 74"), the openings (64, 64', 64") being arranged next to the inlet collar (60) between the inlet collar (60) and an outlet flange (48), the central pipe (46) being formed of an inlet section (50) with an inlet flange (44) and an outlet section (52) with an outlet flange (48), the sections having a common axis (X) and being provided with a sliding joint between the inlet flange (44) and the outlet flange (48) allowing the inlet section (50) to move in axial direction in relation to the outlet section (52), **characterized in that** a urea injection/mixing device (36) is provided with
- a urea mixer (76) between the openings (64, 64', 64") and the outlet collar (62) and
- a urea injection nozzle (67) of a urea injection unit (66) downstream of the urea mixer (76), between the urea mixer (76) and the outlet collar (62).

2. The exhaust gas silencer (30) as recited in claim 1, **characterized in** the urea mixer (76) is provided with an inclined mixing plate (78) arranged in an exhaust gas flow path inside the central pipe (46).

3. The exhaust gas silencer (30) as recited in claim 2, **characterized in** the inclined mixing plate (78) leaves an annular flow passage for the exhaust gas between itself and the interior surface of the central pipe (46).

4. The exhaust gas silencer (30) as recited in claim 2 or 3, **characterized in** the inclined mixing plate (78) is supported inside the central pipe (46) by means of a multitude of, preferably four, legs (80).

5. The exhaust gas silencer (30) as recited in claim 1, **characterized in that** both the outer wall (58) and the central pipe (46) are provided at the inlet end (40) of the exhaust silencer (30) with an opening for insertion of the urea injection unit (66), which is positioned at a distance downstream of the two openings (64), or between the two openings (64; 64', 64") and the outlet collar (62), to the silencer chamber, i.e. next to the openings (64; 64', 64") and opposite the inlet collar (60).

6. The exhaust gas silencer as recited in any one of the claims 1 - 5, **characterized in** the silencer housing having an inlet collar (60) fastened to the central pipe (46), and at least two silencer chambers (74', 74") between the silencer housing and the central pipe (46), the central pipe (46) having one opening (64', 64") for each silencer chamber for arranging communication from the central pipe (46) to the at least two silencer chambers, the opening (64', 64") being arranged next to the inlet collar (60) between the inlet collar (60) and the outlet flange (48).

7. The exhaust gas silencer as recited in claim 1 or 6, **characterized in** the silencer chamber being divided in an axial direction into at least two silencer chambers by means of at least one radially extending partition wall (72).

8. The exhaust gas silencer as recited in claim 6 and 7, **characterized in** a single opening in the central pipe (46) from the central pipe to each silencer chamber.

9. An exhaust gas system, comprising an SCR- reactor (34) and an exhaust gas silencer (38) arranged downstream of the SCR- reactor (34), **characterized in** the exhaust gas silencer (30) of any one of the preceding claims arranged upstream of the SCR- reactor (34).

10. An internal combustion engine comprising the exhaust gas system of claim 9.

## Patentansprüche

1. Abgasschalldämpfer (30), der ein zentrales Rohr (46) umfasst, das ein Einlassende (40) und ein Auslassende (42), eine Schalldämpferkammer (74', 74'') zwischen einem Schalldämpfergehäuse und dem zentralen Rohr (46) aufweist, wobei das Schalldämpfergehäuse einen Einlassbund (60) aufweist, der an dem zentralen Rohr (46) befestigt ist, und einen Auslassbund (62), und wobei das zentrale Rohr (46) zwei Öffnungen (64, 64', 64'') zum Einrichten von Verbindung von dem zentralen Rohr (46) zu der Schalldämpferkammer (74', 74'') aufweist, wobei die Öffnungen (64, 64', 64'') nahe dem Einlassbund (60) zwischen dem Einlassbund (60) und dem Auslassflansch (48) eingerichtet sind, das zentrale Rohr (46) aus einem Einlassabschnitt (50) mit einem Einlassflansch (44) und einem Auslassabschnitt (52) mit einem Auslassflansch (48) gebildet ist, die Abschnitte eine gemeinsame Achse (X) aufweisen und mit einer Schiebemuffe zwischen dem Einlassflansch (44) und dem Auslassflansch (48) versehen sind, die es dem Einlassabschnitt (50) erlaubt, sich in axialer Richtung in Bezug auf den Auslassabschnitt (52) zu bewegen, **dadurch gekennzeichnet, dass** eine Harnstoff-Einspritz-/Mischvorrichtung (36) mit
- einem Harnstoffmischer (76) zwischen den Öffnungen (64, 64', 64") und dem Auslassbund (62) bereitgestellt ist, und
- eine Harnstoffeinspritzdüse (67) einer Harnstoffeinspritzeinheit (66) stromabwärts des Harnstoffmischers (76), zwischen dem Harnstoffmischer (76) und dem Auslassbund (62).

2. Abgasschalldämpfer (30) nach Anspruch 1, **dadurch gekennzeichnet, dass** der Harnstoffmischer (76) mit einer geneigten Mischplatte (78), die in einem Abgasströmungspfad innerhalb des zentralen Rohrs (46) eingerichtet ist, versehen ist.

3. Abgasschalldämpfer (30) nach Anspruch 2, **dadurch gekennzeichnet, dass** die geneigte Mischplatte (78) eine ringförmige Strömungspassage für das Abgas zwischen ihr selbst und der Innenoberfläche des zentralen Rohrs (46) belässt.

4. Abgasschalldämpfer (30) nach Anspruch 2 oder 3, **dadurch gekennzeichnet, dass** die geneigte Mischplatte (78) innerhalb des zentralen Rohrs (46) mittels einer Vielzahl, bevorzugt von vier, Beinen (80) getragen ist.

5. Abgasschalldämpfer (30) nach Anspruch 1, **dadurch gekennzeichnet, dass** sowohl die Außenwand (58) als auch das zentrale Rohr (46) an dem Einlassende (40) des Abgasschalldämpfers (30) mit einer Öffnung zum Einfügen der Harnstoffeinspritzeinheit (66) versehen sind, die in einem Abstand stromabwärts der zwei Öffnungen (64) oder zwischen den zwei Öffnungen (64; 64', 64") und dem Auslassbund (62), zu der Schalldämpferkammer, d. h. neben den Öffnungen (64; 64', 64'') und dem Einlassbund (60) entgegengesetzt, positioniert ist.

6. Abgasschalldämpfer nach einem der Ansprüche 1-5, **dadurch gekennzeichnet, dass** das Schalldämpfergehäuse einen Einlassbund (60) aufweist, der an dem zentralen Rohr (46) befestigt ist, und mindestens zwei Schalldämpferkammern (74', 74") zwischen dem Schalldämpfergehäuse und dem zentralen Rohr (46), wobei das zentrale Rohr (46) eine Öffnung (64', 64'') für jede Schalldämpferkammer zum Einrichten von Verbindung von dem zentralen Rohr (46) zu den mindestens zwei Schalldämpferkammern (64', 64'') aufweist, die neben dem Einlassbund (60), zwischen dem Einlassbund (60) und dem Auslassflansch (48), eingerichtet sind.

7. Abgasschalldämpfer nach Anspruch 1 oder 6, **dadurch gekennzeichnet, dass** die Schalldämpferkammer in einer axialen Richtung in mindestens zwei Schalldämpferkammern mittels mindestens einer sich radial erstreckenden Teilungswand (72) geteilt ist.

8. Abgasschalldämpfer nach Anspruch 6 und 7, **gekennzeichnet durch** eine einzige Öffnung in dem zentralen Rohr (46) von dem zentralen Rohr zu jeder Schalldämpferkammer.

9. Abgassystem, das einen SCR-Reaktor (34) und einen Abgasschalldämpfer (38) umfasst, der stromabwärts des SCR-Reaktors (34) eingerichtet ist, **gekennzeichnet durch** den Abgasschalldämpfer (30) nach einem der vorstehenden Ansprüche, der stromaufwärts des SCR-Reaktors (34) eingerichtet ist.

10. Brennkraftmaschine, die das Abgassystem nach Anspruch 9 umfasst.

## Revendications

1. Silencieux de gaz d'échappement (30) comprenant un tuyau central (46) comportant une extrémité d'entrée (40) et une extrémité de sortie (42), une chambre de silencieux (74', 74") entre un carter de silencieux et le tuyau central (46), le carter de silencieux comportant un collier d'entrée (60) fixé au tuyau central (46) et un collier de sortie (62) et le tuyau central (46) comportant deux ouvertures (64, 64', 64") pour agencer une communication du tuyau central (46) à la chambre de silencieux (74', 74''), les ouvertures (64, 64', 64'') étant agencées près du collier d'entrée (60) entre le collier d'entrée (60) et une bride de sortie (48), le tuyau central (46) étant formé d'une section d'entrée (50) avec une bride d'entrée (44) et une section de sortie (52) avec une bride de sortie (48), les sections comportant un axe commun (X) et étant pourvues d'un joint coulissant entre la bride d'entrée (44) et la bride de sortie (48) en permettant à la section d'entrée (50) de se déplacer dans la direction axiale par rapport à la section de sortie (52), **caractérisé en ce que** un dispositif de mélange/d'injection d'urée (36) est pourvu de :
- un mélangeur d'urée (76) entre les ouvertures (64, 64', 64'') et le collier de sortie (62) et
- une buse d'injection d'urée (67) d'une unité d'injection d'urée (66) en aval du mélangeur d'urée (76), entre le mélangeur d'urée (76) et le collier de sortie (62).

2. Silencieux de gaz d'échappement (30) selon la revendication 1, **caractérisé en ce que** le mélangeur d'urée (76) est pourvu d'une plaque de mélange inclinée (78) disposée dans le trajet de flux de gaz d'échappement à l'intérieur du tuyau central (46).

3. Silencieux de gaz d'échappement (30) selon la revendication 2, **caractérisé en ce que** la plaque de mélange inclinée (78) définit un passage de flux annulaire pour le gaz d'échappement entre elle-même et la surface intérieure du tuyau central (46).

4. Silencieux de gaz d'échappement (30) selon la revendication 2 ou 3, **caractérisé en ce que** la plaque de mélange inclinée (78) est soutenue à l'intérieur du tuyau central (46) au moyen d'une multitude de, de préférence quatre, jambes (80).

5. Silencieux de gaz d'échappement (30) selon la revendication 1, **caractérisé en ce que** à la fois la paroi extérieure (58) et le tuyau central (46) sont pourvus au niveau de l'extrémité d'entrée (40) du silencieux d'échappement (30) d'une ouverture d'insertion de l'unité d'injection d'urée (66), qui est positionnée à une distance en aval des deux ouvertures (64), ou entre les deux ouvertures (64 ; 64', 64'') et le collier extérieur (62), la chambre de silencieux, c'est-à-dire près des ouvertures (64 ; 64', 64'') et à l'opposé du collier intérieur (60).

6. Silencieux de gaz d'échappement selon une quelconque des revendications 1-5, **caractérisé en ce que** le carter de silencieux comporte un collier d'entrée (60) fixé au tuyau central (46) et au moins eux chambres de silencieux (74', 74'') entre le carter de silencieux et le tuyau central (46), le tuyau central (46) comportant une ouverture (64', 64") pour chaque chambre de silencieux pour agencer une communication du tuyau central (46) à au moins deux chambres de silencieux, l'ouverture (64', 64'') étant agencée près du collier d'entrée (60) entre le collier d'entrée (60) et la bride de sortie (48).

7. Silencieux de gaz d'échappement selon la revendication 1 ou 6, **caractérisé en ce que** la chambre de silencieux est divisée dans une direction axiale en au moins deux chambres de silencieux au moyen d'au moins une paroi de partition s'étendant radialement (72).

8. Silencieux de gaz d'échappement selon la revendication 6 ou 7, **caractérisé par** une ouverture unique dans le tuyau central (46) du tuyau central à chaque chambre de silencieux.

9. Système de gaz d'échappement, comprenant un réacteur SCR (34) et un silencieux de gaz d'échappement (38) agencé en aval du réacteur SCR (34), **caractérisé par** le silencieux de gaz d'échappement (30) d'une quelconque des revendications précédentes agencé en amont du réacteur SCR (34).

10. Moteur à combustion interne comprenant le système de gaz d'échappement de la revendication 9.
